# EUROPEAN PATENT APPLICATION

(11) **EP 0 625 441 A1**
(43) Date of publication of application: **23.11.1994**
(21) Application number: 94303182.3
(22) Date of filing: 03.05.1994
(51) Int. Cl.: B60J 7/02, B60J 7/06, B60J 7/08

(54) **Opening roof for vehicle**

(30) Priority: 15.05.1993 GB 9310014
(71) Applicant: Britax Weathershields Limited, Warwick CV34 6DE (GB)
(72) Inventor: Catling, Derek, Tamworth, Staffordshire (GB)
(74) Representative: Hollinghurst, Antony

(57) **Abstract**

An opening roof comprises a frame (20, 22) bounding a roof opening (14) in a vehicle roof (16) and having a flange (26) which is supported on the top surface of the vehicle roof (16) surrounding at least part of the opening (14). A resilient seal (32) is clamped between the flange (26) of the frame (20, 22) and the top surface of the vehicle roof (16) and extends outwardly beyond the frame (20, 22) so as to be engageable by the edge (44) of a cover (12).

## Description

This invention relates to an opening roof of the type comprising a frame member bounding a roof opening in a vehicle roof and having a flange which is supported on the top surface of the vehicle roof surrounding at least part of the opening, together with a cover for covering the roof opening which, in its closed position, extends over the edge of the roof opening on at least one side thereof.

GB-A-945576 discloses an opening roof of this type in which the cover comprises a flexible fabric cover which is secured to the rear edge of the roof opening and, in its closed position, extends over the edge of the roof opening on its front and two lateral sides. EP-A-0098063 discloses an opening roof of the type described above in which the cover is a rigid panel which is pivotally attached to the front edge of the opening. As described, the panel projects only over the frame, but it could be extended so as to project over the vehicle roof.

The present invention is applicable both to opening roofs having rigid covers and to opening roofs having folding covers.

According to the invention, in an opening roof of the type described above, a resilient seal member is clamped between the flange of the frame and the top surface of the vehicle roof and extends outwardly beyond the frame on said at least one side to form a seal for engagement by the cover when in its closed position.

Preferably, the seal member includes a peripheral upwardly extending projection located outside the edge of the cover when the latter is in its closed position. When said one side is the front edge of the roof opening, this upwardly extending projection may be configured to serve as a wind deflector. When said one side is the rear edge of the roof opening, this upwardly extending projection may be configured to serve as a spoiler.

An embodiment of the invention will now be described, by way of example, with reference to the accompanying drawings, in which:
Figure 1 is a perspective view of the upper part of a car body fitted with an opening roof in accordance with the invention;
Figure 2 is a sectional view on the line 2 - 2 in Figure 1;
Figure 3 is a sectional view on the line 3 - 3 in Figure 1;
Figure 4 is a plan view of one corner of the frame of the opening roof shown in Figures 1 to 3, with the cover in its open position; and
Figure 5 is a sectional view on the line 5 - 5 in Figures 1 and 4.

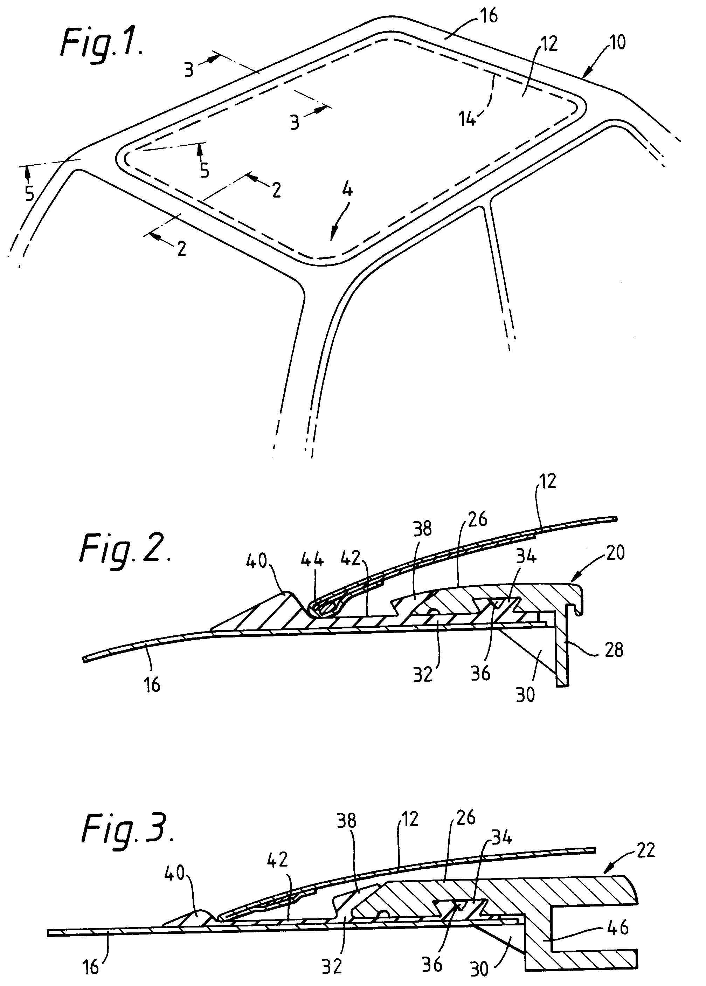

Referring to Figure 1, a motor car 10 has an opening roof comprising a folding fabric cover 12 having its rear end secured to the rear edge of an opening 14 in the vehicle roof 16. When closed, the front edge of the cover 12 is secured to the front edge of the opening 14, for example by a mechanism as disclosed in GB-A-945576.

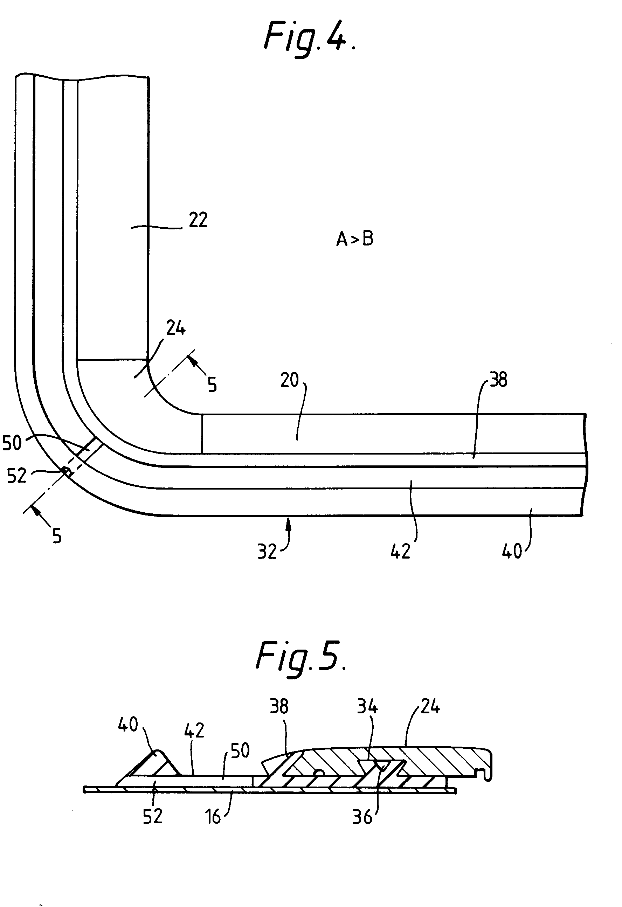

Referring to Figures 2 to 5, the roof opening 14 is bounded by an extruded aluminium frame comprising a front frame member 20 (Figure 2), a pair of side frame members 22 (Figure 3) and a rear frame member (not shown), which are interconnected at the corners by die-cast or moulded corner pieces such as the corner piece 24 (Figure 4).

The front frame member 20 is generally L-shaped, having a top flange 26 which projects over the vehicle roof 16 and a downwardly projecting leg 28 to which are secured a plurality of wedge members 30 which engage with the underside of the vehicle roof 16. A resilient rubber seal member 32 is engaged between the flange 26 and the upper surface of the vehicle roof 16 and has an upwardly extending dovetail projection 34 which engages in a complementary shaped groove 36 in the bottom surface of the flange 26 so as to inhibit lateral movement of the seal 32 relative to the frame member 20. The seal 32 has an intermediate projection 38 which engages the outer edge of the flange 26 and, together with a peripheral projection 40, bounds a rainwater channel 42 formed in the upper edge of the seal 32. The front edge 44 of the fabric cover 12 is received in the channel 42. The projection 40 extends above the edge of the cover 44 and is of a height chosen to serve as a wind deflector for use when the cover 12 is in its open position.

Referring to Figure 3, the horizontal part of the extrusion 22 is generally similar to the corresponding part of the front frame member 20 and the various elements thereof are denoted by the same reference numerals. However, the downwardly extending leg 28 is replaced by a downwardly extending channel formation 46 which serves to support a guide channel for conventional sliding cross members (not shown) which support the fabric cover 12. The side members 22 are held in place by wedges 30 similar to those which hold the front member 20 in place.

The cross-section of the seal 32 in the vicinity of the side members 22 is similar to that illustrated in Figure 2 except that the outer projection 40 is not as high in this region because it does not serve as a wind deflector.

Referring particularly to Figures 4 and 5, at each of the four corners of the roof, the seal 32 has a drain channel 50 formed in the bottom of the rainwater channel 42. The drain channel 50 leads into a hole 52 which extends under the outer projection 40 so as to allow escape of any rainwater which collects in the channel 42.

Although the invention has been described with reference to an opening roof having a folding fabric cover, it is equally applicable to an opening roof in which the cover is in the form of a rigid panel. It can also be applied to an escape hatch which is normally closed by a completely removable panel.

## Claims

1. An opening roof comprising a frame (20, 22) bounding a roof opening (14) in a vehicle roof (16) and having a flange (26) which is supported on the top surface of the vehicle roof (16) surrounding at least part of the opening (14), together with a cover (12) for covering the roof opening (14) which, in its closed position, extends over the edge of the roof opening (14) on at least one side thereof, characterised in that a resilient seal member (32) is clamped between the flange (26) of the frame (20, 22) and the top surface of the vehicle roof (16) and extends outwardly beyond the frame (20, 22) on said at least one side to form a seal for engagement by the cover (12) when in its closed position.

2. An opening roof according to claim 1, wherein the surface of the seal member (32) abutting the frame (20, 22) has a formation 34 shaped to engage with a complementary formation (36) on the frame (20, 22).

3. An opening roof according to claim 1, wherein the seal member (32) includes a peripheral upwardly extending projection (40) located outside the edge of the cover (12) when the latter is in its closed position.

4. An opening roof according to claim 3, wherein said one side is the front edge of the roof opening (14), and the peripheral projection (40) is configured to serve as a wind deflector.

5. An opening roof according to claim 3, wherein said one side is the rear edge of the roof opening (14), and the peripheral projection (40) is configured to serve as a spoiler.

6. An opening roof according to claim 3, 4 or 5, wherein the seal member (32) includes an intermediate upwardly extending projection (38) located adjacent to the outside edge of the frame (20, 22) and, together with the peripheral projection (40), forming a rainwater channel (42) on the upper surface of the seal member (32).

7. An opening roof according to claim 6, further comprising a drain hole (52) extending from the rainwater channel (42) under the outer projection (40).
